# EUROPEAN PATENT APPLICATION

(11) **EP 0 978 955 A1**
(43) Date of publication of application: **09.02.2000**
(21) Application number: 98306228.2
(22) Date of filing: 04.08.1998
(51) Int. Cl.: H04B 7/208, H04B 7/185

(54) **Zonal congestion control in a mobile satellite communication system**

(71) Applicant: ICO Services Ltd., London W6 9BN (GB)
(72) Inventor: Lu, Sze-Ching, Sutton, Surrey SM1 2TJ (GB)
(74) Representative: Read, Matthew Charles

(57) **Abstract**

A satellite communications system 34 36 10 where a communications satellite 10 provides a plurality of spot beams 30, controlled by an earth station 36, to communicate with user terminals 34 on the surface of the earth 14, has the earth station 36 divide its part of the surface of the earth into zones 38, the earth station finding the position of each interactive user terminal 34 on the surface of the earth 14 and informing the user terminal in which zone it lies. The earth station 36 logs the calls from each zone 38 and establishes if call congestion is occurring in any zone 38, or for other reasons. When congestion occurs, the earth station 36 issues indication to each user terminal of the identity or identities of that zone or those zones where congestion arises. If inside a zone where congestion arises, and a service level indicator, provided by the earth station 36, exceeds that allocated to the user terminal 34, the user terminal 34 shuts down until it receives a service level indicator allowing it to function. The earth station 36 continually adjusts the service level indicator to keep the congestion situation just suppressed.

## Description

The present invention relates to satellite communications systems.

Such systems comprise one or more earth stations, capable of communications with each of a plurality of user terminals, much like a cellular telephone handset. Communications is achieved by the earth station relaying messages and control signals, to each active user terminal, via one or more communications satellites, in orbit above the surface of the earth. In turn, the user terminal relays messages and control and response signals, to the earth station, through the same satellite or satellites.

The, or each, communications satellite projects an area of radio coverage, or footprint, upon the surface of the earth. Just like a cellular system, the satellite communications system divides its footprint into a number of separate, but slightly overlapping, spot beams, which, in general terms, correspond to the individual cells of a terrestrial cellular telephone system. In general, the overall size of the coverage of a spot beam is much greater than the area of an individual cell in the equivalent terrestrial system. Some spot beams, at any particular moment, may encompass large, dense areas of population where demand for communications is very high. Equally, other spot beams may, at any moment, be situated over sparse areas where there is almost no demand for communications. In a communications satellite, the number of allocatable frequencies and the available transmission power in each spot beam is limited by the system control configuration and the instant power that the satellite can draw from solar panels. Should an individual spot beam become "overloaded" with too many requests for service, a crisis is experienced and not all potential users are able to receive an acceptable level of service.

An area of congestion can span more than one spot beam. The effective use of more than one spot beam can be jeopardised unless suitable measures are taken. A small area, originating a great deal of traffic, can blight the coverage over a very large area. The result can be clashing requests for service from the individual user terminals, rendering each other's requests unreadable and thus denying service requests to each other. Equally, the spot beam can simply run out of channels. The rural or maritime users in any spot beam encompassing an urban centre can be effectively barred from reasonable service simply because of the heavy traffic from the urban centre. The prior art solution of providing congestion control to entire spot beams penalises dispersed rural or maritime users in favour of the localised urban users and causes the system not to provide the promised level of service.

The present invention seeks to overcome these problems.

According to a first aspect, the present invention consists in a satellite communications system comprising a satellite, in orbit about the earth, a plurality of user terminals on the surface of the earth, and an earth station, operative to exchange signals with each of said plurality of user terminals via said satellite, said system being characterised by: each of said plurality of user terminals and said earth station being co-operative to measure the position of said each of said plurality of user terminals on the surface of the earth; by said earth station being operative to indicate to each of at least some of said plurality of user terminals in which one of a plurality of zones they respectively are located; by, said earth station being operative to detect a congestion condition and to detect from which zone or zones the congestion originates; said earth station being operative to indicate to said at least some of said plurality of user terminals the identity of that zone or those zones from which congestion originates; and by each of said at least some of said plurality of user terminals observing congestion control measures if said respective indicated zone of each of said at least some of said plurality of user terminals lies within a zone from which congestion originates.

According to a second aspect, the invention consists in a method for use in a satellite communications system comprising a satellite, in orbit about the earth, a plurality of user terminals on the surface of the earth, and an earth station, operative to exchange signals with each of said plurality of user terminals via said satellite, said method being characterised by including the steps of: each of said plurality of user terminals and said earth station co-operating to measure the position of said each of said plurality of user terminals on the surface of the earth; said earth station indicating to each of at least some of said plurality of user terminals in which one of a plurality of zones they respectively are located; said earth station detecting a congestion condition and detecting from which zone or zones the congestion originates; said earth station indicating to said at least some of said plurality of user terminals the identities of that zone or those zones from which congestion originates; and each of said at least some of said plurality of user terminals observing congestion control measures if said respective indicated zone of each of said at least some of said plurality of user terminals lies within a zone from which congestion originates.

According to a third aspect, the present invention consists in a user terminal, being one of a plurality of user terminals, for user in satellite communications system comprising a satellite, in orbit about the earth, said plurality of user terminals on the surface of the earth, and an earth station, operative to exchange signals with each of said plurality of user terminals via said satellite, said user terminal being characterised by: each of said plurality of user terminals and said earth station being co-operative to measure the position of said each of said plurality of user terminals on the surface of the earth; by each of at least some of said plurality of user terminals being operative to receive, from said earth station, indication of in which one of a plurality of zones they respectively are located; by, when said earth station detects a congestion condition and detects from which zone or zones the congestion originates, each of said at least some of said plurality of user terminals being operative to receive, from said earth station, indication of the identity of that zone or those zones from which congestion originates; and by each of said at least some of said plurality of user terminals observing congestion control measures if said respective indicated zone of each of said at least some of said plurality of user terminals lies within a zone from which congestion originates.

According to a fourth aspect, the present invention consists in an earth station, for use in a satellite communications system comprising a satellite, in orbit about the earth, a plurality of user terminals on the surface of the earth, and said earth station, operative to exchange signals with each of said plurality of user terminals via said satellite, said earth station being characterised by: each of said plurality of user terminals and said earth station being co-operative to measure the position of said each of said plurality of user terminals on the surface of the earth; by said earth station being operative to indicate to each of at least some of said plurality of user terminals in which one of a plurality of zones they respectively are located; by, said earth station being operative to detect a congestion condition and to detect from which zone or zones the congestion originates; and by said earth station being operative to indicate to said at least some of said plurality of user terminals the identity of that zone or those zones from which congestion originates for each of said at least some of said plurality of user terminals observing congestion control measures if said respective indicated zone of each of said at least some of said plurality of user terminals lies within a zone from which congestion originates.

All of the aspects of the invention provide that the congestion control measures include; the earth station allocating and communicating a respective graded service level indicator to said each of at least some of the plurality of user terminals, the earth station allocating a minimum service level to allow access to said system when each of the at least some of the plurality of user terminals is within the indicated distance of the indicated point, and each of the at least some of the plurality of user terminals attempting to access the system only if their respective allocated service level indicator exceeds the minimum service level.

All of the aspects of the invention, further, provide that the earth station is operative to maintain a table of the position and time of each of the plurality of user terminals making a request for service, and is operative to detect a condition of radio congestion if more than a predetermined number of requests for service arise in a predetermined time within a predetermined area.

All of the aspects of the invention, yet further, provide that the earth station is operative to detect a congestion condition if more than a predetermined proportion of requests for service from the plurality of user terminals are unreadable.

All of the aspects of the invention, still further, provide that the earth station is operative, progressively, to adjust the minimum service level, to maintain the proportion of unreadable requests below the predetermined proportion.

All of the aspects of the invention, even further, provide that the satellite is operative to provide a array comprising plurality of adjacent spot beams to give radio coverage to the surface of the earth, and that the earth station is operative independently to maintain the detection of the congestion condition and independently to provide the indication of the point and the distance for each of the plurality of spot beams.

All of the aspects of the invention, further, provide that, when the array is in movement with respect to the surface of the earth, and as one spot beam begins to replace another spot beam to cover the area of congestion, the earth station is operative to transfer all data relating to congestion control in the one spot beam for use in operation of the another spot beam. The invention is further explained, by way of an example, in the following description, read in conjunction with the appended drawings, in which:
Figure 1 shows one plane of a constellation of communications satellites, in orbit about the earth, and shows the extent of radio coverage.
Figure 2 shows how two orthogonal orbits of communications satellites can be used to give radio coverage to the full earth,
Figure 3 shows a typical communications satellite footprint on the surface of the earth.
Figure 4 illustrates how the footprints of figure 3 can overlap.
Figure 5 shows a typical environment for a satellite communications system, with an earth station and a user terminal on the surface of the earth, in mutual communications via one or more satellites.
Figure 6 shows the manner that an earth station, or some other part of the system, divides the surface of the earth into zones, and how the spot beams relate thereto.
Figure 7 shows how the earth station measures the traffic rate in each zone of figure 6 and, if congestion is detected, maps areas of high traffic and identifies that zone or those zones wherein congestion control measures are to be applied.
Figure 8 is a flowchart showing the activities of a user terminal while operating according to the present invention.
   And
Figure 9 is a flowchart showing the operation of an earth station while operating according to the present invention.

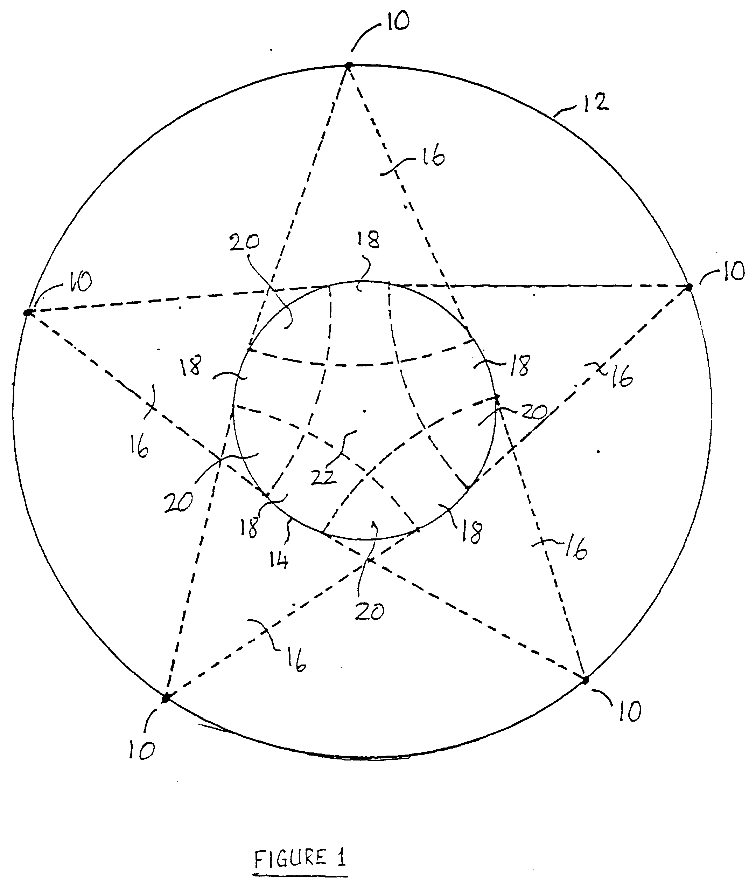

Figure 1 shows a planar constellation of communications satellites 10 disposed about the earth 14.

The plurality of communications satellites 10 are evenly disposed around a circular orbit 12 above the surface of the earth 14. Each of the communications satellites 10 is designed to provide radio communications with apparatus on the surface to the earth 14 when the individual communications satellite 10 is more than 10 degrees above the horizon. Each communications satellite 10 therefore provides a cone 16 of radio coverage which intersects with the surface of the earth 14.

The surface of the earth has three types of areas. A first type of area 18 is one which has radio coverage from only one communications satellite 10. A second type of area 20 is an area where there is radio coverage from more than one communications satellite 10. Finally, a third type of area 22 receives radio coverage from none of the communications satellites 10 in the orbit 12 shown.

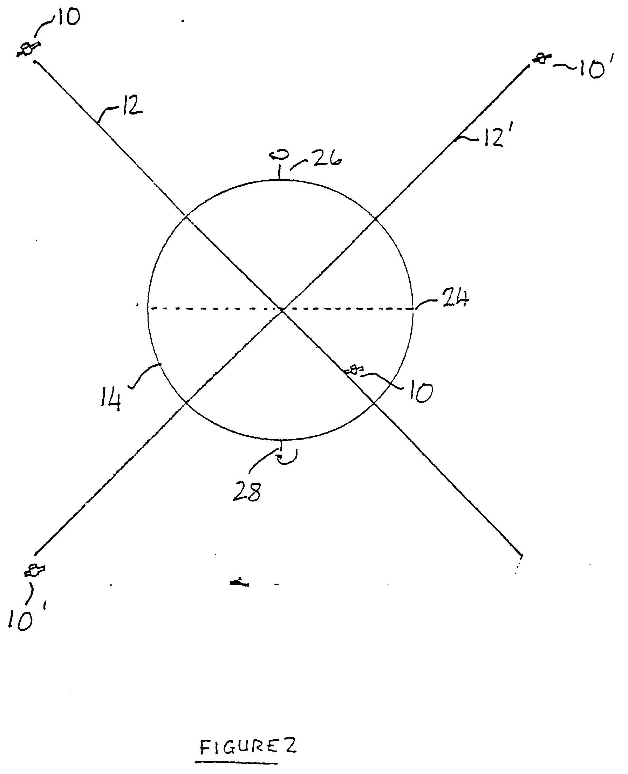

Figure 2 illustrates how the communications satellites 10 are disposed in orthogonal orbital planes.

The first orbit 12 of figure 1 is supplemented by a second orbit 12' having communications satellites 10 disposed there about in a similar manner to that shown in figure 1. The orbits 12' are orthogonal to one another, each being inclined at 45 degrees to the equator 24 and having planes which are orthogonal (at 90 degrees ) to each other.

In the example shown, the communications satellites 10 orbit above the surface of the earth 14 at an altitude of 10 355km. Those skilled in the art will be aware that other orbital heights and numbers of communications satellites 10 may be used in each orbit 12, 12'. This configuration is preferred because the example provides global radio coverage of the earth 14, even to the north 26 and south 28 poles, with a minimum number of communications satellites 10. In particular, the orthogonality of the orbits ensures that the communications satellites 10 of the second orbit 12' provides radio coverage for the third types of area 22 of no radio coverage for the communications satellites in the first orbit 12, and the communications satellites 10 in the first orbit 12 provide radio coverage for those areas 22 of the third type where the communications satellites 10 of the second orbit 12' provide no radio coverage. By such an arrangement, it is ensured that every point, on the surface of the earth 14, has, at least, one communications satellite 10 10', visible at all times.

It will become clear that, although the two orbits 12, 12' are here shown to be of the same radius, the invention as hereinbefore and hereinafter described will function with orbits 12, 12' of different radii. Equally, there may be more than two orbits 12, 12 '. So far as the present invention is concerned, the only requirement is that every part of the surface of the earth 14 is in receipt of radio coverage from at least one communications satellite 10 at all times.

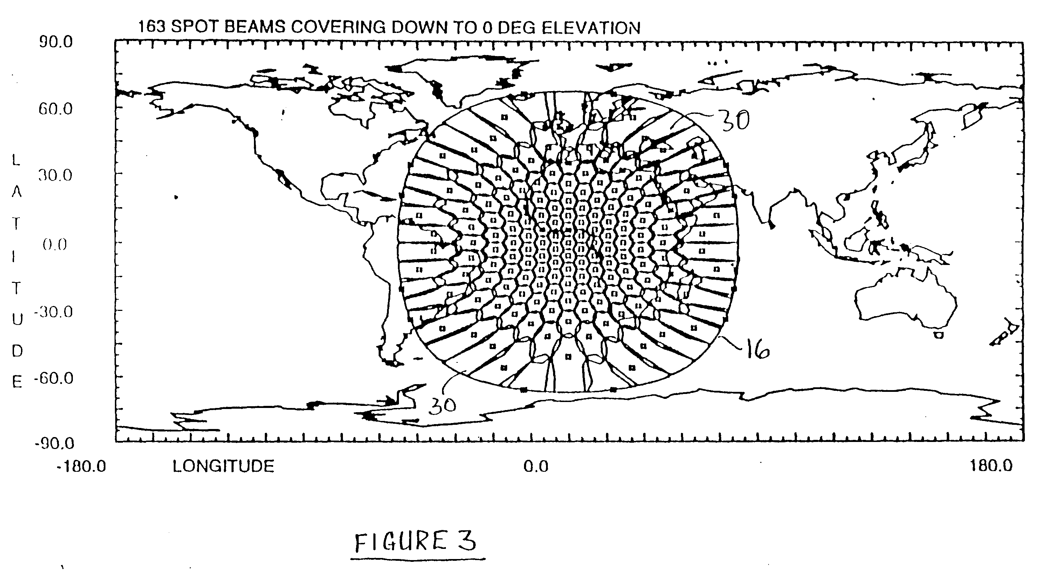

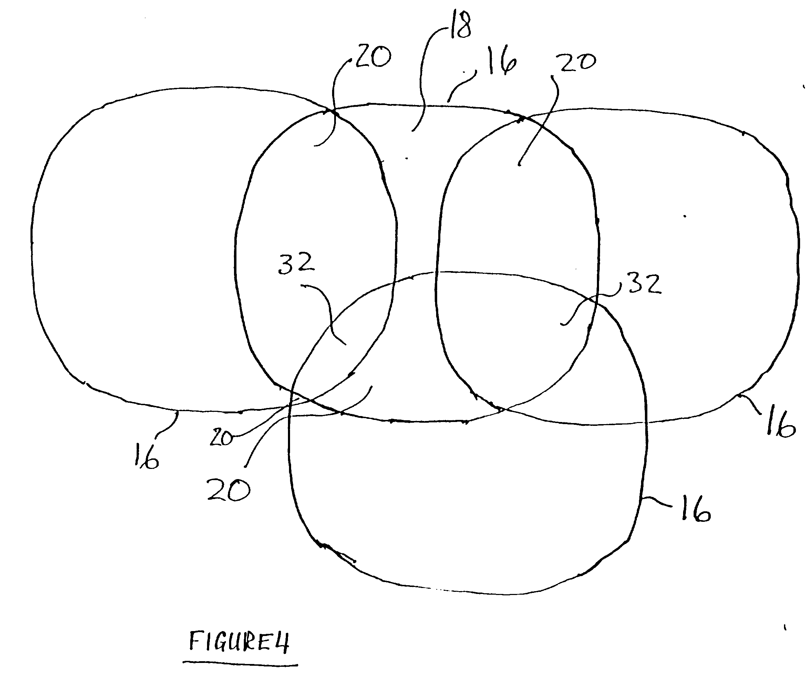

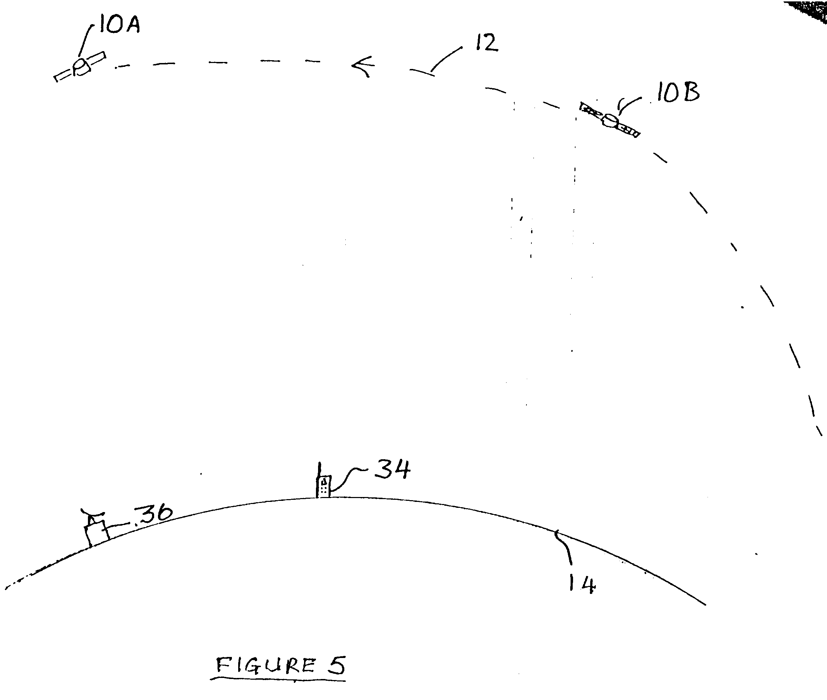

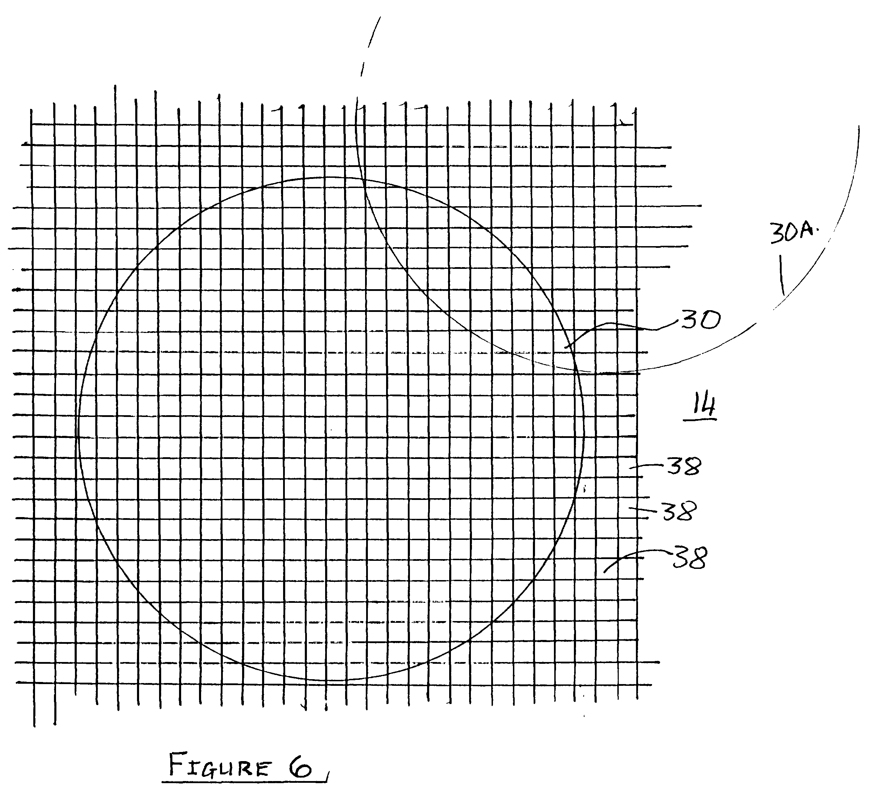

Figure 3 shows the structure of the cone 16 of radio coverage provided by each communications satellite 10. For convenience, the radio coverage cone 16 is shown centred, on a map of the earth, at latitude 0 degrees at longitude 0 degrees. The cone 16 of radio coverage is divided into a plurality of spot beams 30, by means of a corresponding plurality of directional antennae on the communications satellite 10. The communications satellite 10 is intended for mobile radio telephone communications and each of the spot beams 30 corresponds, roughly, to the equivalent of a cell in a cellular radio telephone network. In figure 3, the cone of radio coverage 16 is distorted due to the geometry of the map of the earth's surface provided. Figure 3 also shows the extent of interaction of the cone 16 of radio coverage down to the edges of the cone 16 being tangential to the earth's surface, that is, to the point where the cone 16 represents a horizontal incidence at its edges, with the surface of the earth. By contrast, figure 1 shows the cone 16 at a minimum of 10 degrees elevation to the surface of the earth.

It is to be observed, that because of the curvature of the earth, the spot beams 30 are of near uniform, slightly overlapping circular shape at the centre whereas, at the edges, the oblique incidences of the spot beams 30 onto the surface of the earth 14 causes considerable distortion of shape.

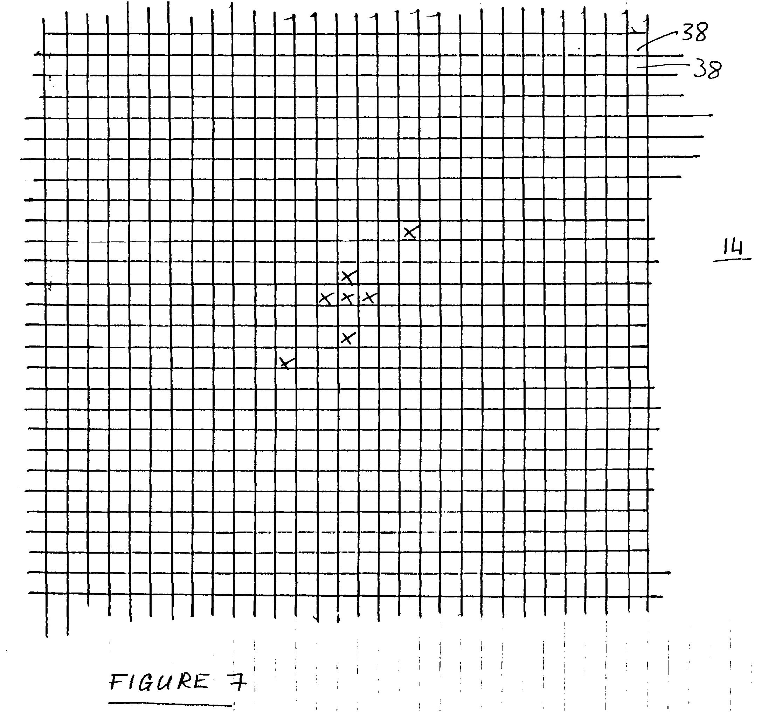

Figure 4 shows how the cones 16 of radio coverage may interact with the surface of the earth to produce many types of different regions.

As discussed with reference to figure 1, numerous cones or radio coverage 16 may overlap to produce first areas 18 where there is radio coverage by only one communications satellite, second areas 20 where there is radio coverage by two communications satellites, and even fourth areas 32 where coverage is provided by three or more communications satellites. It is to be understood that each of the cones 16 of radio coverage represented in figure 4 is divided, as shown in figure 3, into its own independent set of spot beams 30.

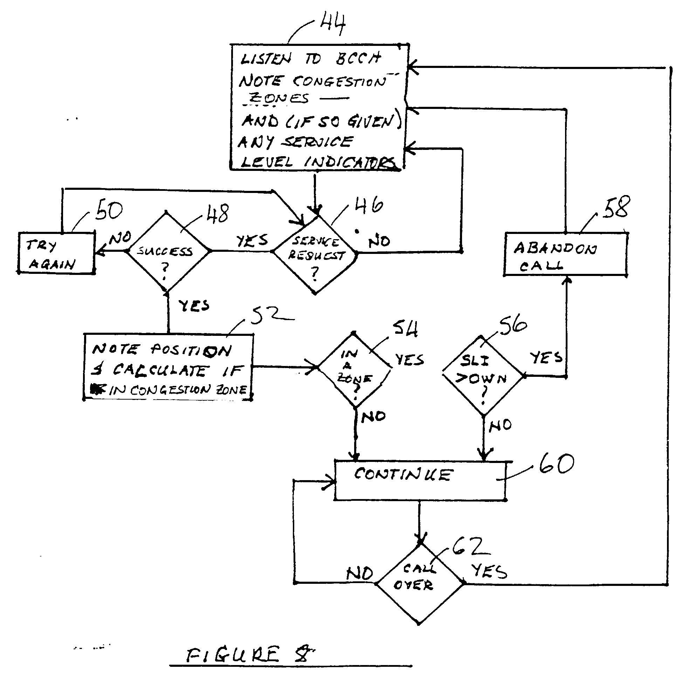

Figure 5 shows the elements of the communications system wherein the present invention operates. A user terminal 34, optionally but not necessarily in the form of a portable telephone handset, is located on the surface of the earth 14. The user terminal 34 seeks to establish communications with a first communications satellite 10A by accessing the paging channel (PCH) of the first satellite 10A. The user terminal 34 also wishes to access the paging channel PCH of a second communications satellite 10B, which may or may not be in the same orbit 12 as the first communications satellite 10A. The first and second communications satellites 10A 10B , are both in communications contact with a satellite earth station 36. Alternatively, each of the satellites 10A 10B can be in communication with their own earth stations 36, rather than sharing a single earth station.

By being able to access the paging channel PCH of more than one satellite 10A 10B, the user terminal 34 gains a greater reliability of access to the system. An example of the advantage is where, temporarily, the radio path to one of the satellites 10A 10B, may be cut off. The user terminal may then gain access to the system through the other satellite 10B 10A. The first 10A and second 10B satellites , once accessed and processing a call from the user terminal 34, can pass messages and voice communications from the user terminal 34 to the earth station 36 and from the earth station 36 to the user terminal 10, both potential paths being via a satellite 10A 10B.

The first action of the present invention is to be able to find the position of a user terminal 34 on the surface of the earth 14. There are many that this may be done. One, non-preferred but possible method is where the user terminal 34 itself includes a GPS (global positioning by Satellite) facility whereby, using positioning satellites (not shown) and itepretting their signals, the user terminal 34 can find its position on the surface of the earth 14 and report that position back to the earth station 36.

The preferred method, for the embodiment of the invention, has the earth station 36 and the user terminal 34 exchanging signals via one or more of the communications satellites 10A 10B for the earth station 36 to analyse the signals and, using a knowledge of the actual instant positions in space of the one or more communications satellites 10A 10B, to determine the position of the user terminal 34 on the surface of the earth.

In the preferred method of position determination, if only one communications satellite 10A is visible to the user terminal 14, the earth station 36 exchanges a first set of signals with the user terminal 34 to measure the Doppler frequency shift experienced by a signal passing from the communications satellite 10A and the user terminal 34. The earth station 36 knows the position, velocity and direction of the satellite 10A in its orbit 12. By measuring the actual Doppler frequency shift, and by a knowledge that the frequency change depends upon the cosine of the angle between the line joining the position of the user terminal 34 and the satellite 10A relative to the tangent to the orbit 12 of the satellite 10A, the earth station 36 is able to place the user terminal at any point on the arcuate intersection line of a cone of projection from the satellite 10A with the surface of the earth 14.

Again, if only one satellite 10A is visible to the user terminal 34, the earth station 36 next sends a round-trip message to and from the user terminal to measure the propagation delay between the earth station 36 and the user terminal 34. The earth station 36 also measures the propagation delay between itself 36 and the communications satellite 10A, and thereby deduces the propagation delay between the communications satellite 10A and the user terminal 34. Since radio signals propagate at the speed of light, the earth station then knows the distance between the satellite 10A and the user terminal 34. The earth station 36 locates the user terminal 34 at any point on the circle of intersection of a sphere, of radius equal to the distance from the user terminal 34 to the satellite 10A, and centred on the satellite 10A, with the surface of the earth 14. The user terminal is then known to be on the point or points of intersection of the projected circle of the present paragraph and the arcuate intersection line of the previous paragraph. Ambiguities can be cleared up by detecting in which spot beam 30 the user terminal 34 is located.

In the preferred embodiment, if two communications satellites 10A and 10B are visible, the earth station simply measures the distance between the user terminal 34 and each of the satellites 10A 10B, as described in the immediately prior paragraph, and locates the user terminal at the point of intersection of the two circular lines of intersection of the appropriate sphere, projected from each satellite, with the surface of the earth 14. The description has given one non-preferred and one preferred method for finding the position of the user terminal 34 on the surface of the earth 14. It is neither essential nor important exactly what method is used to find the position of the user terminal 34. So far as the present invention is concerned, it is merely necessary for the position of the user terminal to be measurable by or made known to the earth station 36, and to that end, any method achieving one or both of these ends is acceptable. The embodiments have been shown merely to show that the position determination of the user terminal 34 can be achieved within the confines of a communications satellite system.

The second element of the present invention is for the system, in the form, in this embodiment, of the earth station 36, to measure the rates of calls arriving from different parts of the surface of the earth 14.

Figure 6 shows the analytical system within which the earth station 36 maintains its measurements.

The earth station 36 (in the preferred embodiment), or any other part of the overall communications system linked to the earth station 36, as the skilled implementer may chose, divides the surface of the earth 14 into a plurality of zones 38 each of a predetermined area, forming a tessellation covering the entire surface of the earth, or at least that portion of the surface of the earth within geographical range, via the communications satellite or satellites 10A 10B, available to the earth station 36. In the example shown, the predetermined area of each zone 38 is 625 Square kilometres, each being defined by a square 25 kilometres by 25 kilometres. The shape and dimension of each zone 38 is not binding for the operation of the present invention. Depending upon the operational needs of the system, and upon the positional accuracy of the herinbefore described methods of finding the position of the user terminal 34 on the surface of the earth 14, those skilled in the art can chose other dimensions and other shapes for the tessellation. The zones 38 could be hexagons, triangles, or any other shape which will provide a tessellation. Likewise, the size of the zones 38 need not be constant over the surface of the earth 14. Zones 38 which occur over desert areas or over oceans could be of much larger area than those that appear over inhabited areas, and could be much larger again than those that occur over densely populated urban areas. The present invention encompasses all of these possibilities. Also shown in figure 6, is a spot beam 30 to illustrate how a spot beam 30 overlies the zones 38. The mapping of the surface of the earth 14, held by the earth station 36, is not based upon the relative position of a user terminal 34 within the spot beam 30, but rather within the tessellation of zones 38 which are fixed upon the surface of the earth 14. The spot beam 30 is not alone, and, as is clear from figures 3 and 4, can be overlaid or overlapping with one or more other spot beams 30A.

The area under any spot beam 30 is populated with a plurality of user terminals 34. At any time, each user terminal 34 can request service from the earth station 36. At each request, the earth station determines the position of the user terminal 34 on the surface of the earth. Once the position of the user terminal is noted, the request for service is allocated to the particular zone 38 from which it originated. The earth station 34 keeps a running log for each zone 38. The earth station detects a congestion condition if any of the following criteria are detected.

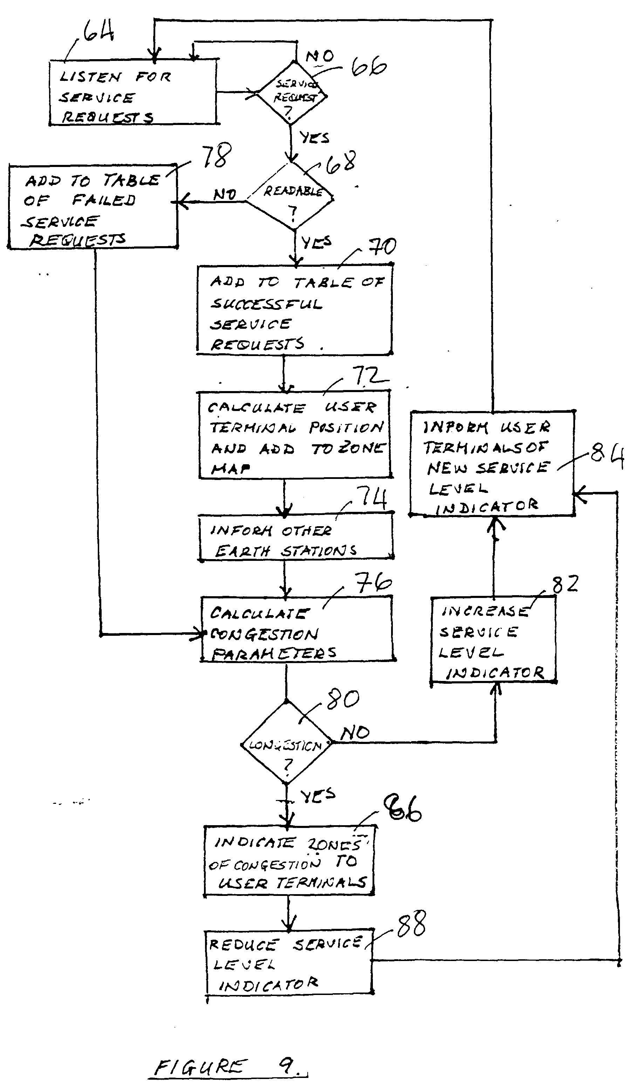

The first congestion criterion is where more than a predetermined number of requests for service originate from a zone 38 or group of zones 38 within a predetermined period. This marks an epoch of high traffic demand. The earth station 36 then notes from which zones 38 the high demand rate originates. Zones 38 can be joined together to form a "block" and the earth station 36 maps out the geographic distribution and takes other measures herinafter described with reference to Figure 7.

The second congestion criterion is where the proportion of failed attempts to request service against the total number of attempts to request service exceeds a predetermined ratio. When a user terminal 34 seeks to send a request for service to the earth station, depending upon the International Mobile Subscriber Identification (IMSI), a number held in the SIM card (Subscriber Identity Module) of the user terminal 34, each user terminal is allocated a particular one of a finite number of timeslots. More than one user terminal 34 can attempt to use the same timeslot. When this happens, the signals from the two user terminals 34 interfere with each other and the data is lost. This constitutes a failed request for service, and, if viewed logically, in fact represents two failures, since two user terminals failed. Equally, being a satellite system, user terminals 34, allocated adjacent or nearby timeslots to request service, can, because of the varying propagation delay over the particular spot beam with increasing or decreasing distance from the communications satellite 10A 10B, can have their request for service signals overlap. Again the signals interfere with each other an a failed request for service is noted.

When the earth station 36 detects failed (unreadable) requests for service, it keeps a running log over a preset period and works out the ratio of failed as against successful attempts to request service. In the preferred embodiment, if the proportion of failed service request attempts exceeds 25% of the overall number of service request attempts, then the earth station detects a congestion condition and moves into congestion control. Whether or not any zone 38 has exceeded the predetermined rate of service requests, as described with reference to the first criterion for detecting a congestion situation, the earth station 36 selects those zones 38 with the highest call rates and makes its map, as later described with reference to figure 7.

Figure 7 shows the manner in which the earth station 36 makes its map for purposes of localised congestion control.

In figure 7, those zones 38 with a high traffic rate are marked with an X. The marked zones 38, X are those where either the first criterion for congestion detection has occurred, or the busiest zones if the second criterion for congestion detection has occurred.

The next stage in the operation of the invention is that each user terminal 34 should know in which zone 38 it lies. This all depends upon the manner in which the position of the user terminal 34 was found. In some methods, the user terminal 34 itself will know its position, and will itself know its zones and have informed the earth station 36. In the preferred method, above described, it is the earth station 34 which knows the position of the user terminal 34. In this instance, it is up to the earth station 34 to tell the user terminal 34 in which zone the user terminal 34 lies. Thus, on each instance of successful request for service, the earth station 36, in its interactions with the user terminal 34, will inform the user terminal 34 of which zone the user terminal occupies. The zones, for preference, are sequentially and progressively numbered. It is to be appreciated that, within the scope of the present invention, any form of zone identification will suffice, just so long as each zone 38 has a unique identity.

The next stage in the operation of the invention is that the user terminal 34, in the event of the earth station 36 determining that congestion control should be applied, should be informed of the identities of those zones 38 which are experiencing congestion control. This is done by the earth station 36 either informing the individual user terminal 34 when a request for service is responded to, or by the earth station 36 sending out a general broadcast to all user terminals 36 in the particular spot beam 30 which encompasses the user terminals 36. It is not important to the present invention exactly how each user terminal 36 receives the information, merely that it does.

The next stage in the operation of the present invention is that the each user terminal 36 should be able to determine whether or not it is within a zone 38 which is subject to congestion control. Once again, it is to be appreciated that the earth station 36 may have specified several zones. It is the task of the user terminal 34, having been given indication of its zone 38 by the earth station 36, or having its own knowledge of its zone 38, to determine whether or not it is within a zone of congestion control.

Having determined whether or not it is within any zone 38 X of congestion control, it is next the business of each informed user terminal 34 to determine whether or not it is entitled to operate under congestion conditions.

If the user terminal 34 is not within any zone 38 X subject to congestion control, it can continue, as before, regardless of any congestion control measures. However, if a user terminal 34 is within a zone 38 X of congestion control, it must observe a hierarchical method of access control.

The invention, in its practise, further requires that each user terminal 34 is allocated a service level indicator. This indicator is one of an ordered set, where members, superior in the set, are accorded service before those inferior in the set.

The allocation of a service level indicator depends on many things. It may be, that for a higher subscription level, the user of a user terminal is afforded a superior service level indicator. Likewise, for any other fiscal, geographical or social reason, a particular user terminal may be allocated a service level indicator which, in essence, determines the hierarchical order in which user terminals 34 will be denied service in a congestion situation.

The manner in which a service level indicator is allocated to a user terminal 34 can take several forms. For one example, the service level indicator can be incorporated in the SIM card. At the time of making a connection contract, an appropriate service level indicator can be incorporated in the SIM card. Equally, if a particular user is connected with emergency services, or other vital functions, the SIM card can reflect this, giving the highest possible service level indicator to that user terminal. In another example, when a user terminal registers with the system, or requests service, the earth station 36, possibly operating through other parts of the system, on identification of the IMSI of a particular user terminal 34, and reference to its status within the system, can allocate an appropriate service level indicator, which is communicated to the individual user terminal 34, possibly during the exchange of messages between the earth station 36 and the user terminal 34 during a successful request for service. It is not important to the present invention just how the user terminal 34 acquires its service level indicator. It is merely necessary that the user terminal 34 is aware of its respective service level indicator.

The next element, in the present invention, is that each user terminal 34 be made aware whether or not its particular service level indicator, should the particular user terminal be within a zone 38 X of congestion control, is deemed worthy, by the earth station 36, of receiving service, at any particular moment.

This involves the earth station 36, faced with an indication of congestion, by whatever criterion, beginning to shut down user terminals 34 that happen to be in a zone 38 X of congestion control, in reverse hierarchical order. This is achieved by a general broadcast (BCCH) within the spot beam 30. Every user terminal 34, within the spot beam 30, listens at pre-allocated times and on pre-allocated frequencies, to a general broadcast signal in a particular timeslot. In that timeslot the earth station, via the satellite 10A 10B, informs all user terminals 34 above which grade of the hierarchical service level indicator, each user terminal 34, if it within a zone 38 X of congestion control , is allowed continued service.

On receipt of this information, each user terminal 34, if it is within a zone 38 X of congestion control, assesses whether or not it can continue service. If the broadcast signal (BCCH) indicated a higher service level indicator than that possessed by a user terminal 34, that user terminal terminates its current activities and does not attempt further access to the system until permitted. If the broadcast service level indicator is less that that allocated to a user terminal 34 within a zone 38 X of congestion control, the user terminal 34 carries on regardless.

The next element of the embodiment of the invention is an activity of the earth station 36 where the earth station 36 periodically adjusts the service level indicator, sent to all of the user terminals in an individual spot beam, adjusting the indicated service level up or down, so that the condition that triggered the detection of congestion is just avoided, thereby providing the best service possible for those in the zones of high or highest traffic while maintaining the rest of the spot beam available to the user terminals of other subscribers.

The final element of the embodiment of the present invention involves the transfer of congestion data from one spot beam 30 to another as each spot beam 30 comes over a congested area 38, X. This can take place between spot beams in the same earth station 36. Any one satellite 10A 10B is controlled by a single earth station 36 at any moment. Equally, more than one satellite 10A 10B can be controlled by a single earth station. If this is the case, the problem is solved by the earth station 36 merely keeping a general map of zones 38 with related traffic rates and noting which spot beams 30 are operative on which zones 38. In addition, satellites 10A 10B can be controlled by different earth stations 36. In this instance, the problem is solved by the different earth stations 36 exchanging traffic data about any zones 38 which are within their common range.

Finally, for completeness, there follow two flowcharts, indicating the general activities of the user terminal 34 and of the earth station 36 in their compliance with the embodiment of the invention.

Figure 8 shows the activities of a user terminal 34. Entry is to a first operation 44 where the user terminal listens to broadcast messages from the particular satellite 10A 10B and spot beam 30 it occupies, the broadcast messages being carried on the broadcast channel (BCCH). In particular, with regard to the present invention, the user terminal 34 listens for any indications, from the earth station 36, indicating the identities of any zones 38 X which are subject to congestion control. The user terminal 34 also listens for any service level indicators being given by the earth station 36.

Control then passes to a first test 46, where the user terminal 34 decides whether or not it requires a service request. This can come from the user terminal 34 operator keying a number, or from other autonomous timed operations such as registration, re-registration, etc.

If the first test 46 detects that no service request is required, control passes back to the first operation 44. If the first test 46 detects that a service request is required, control passes to a second test 48 which monitors whether or not the service request was successful.

If the second test 48 detects that the service request was not successful, a second operation 50 re-tries the service request and passes control back to the first test 46. In this way, service requests will repeatedly be re-tried until the need for a service request is gone or until a service request is successful.

If the second test detects that the service request was successful, control is passed to a third operation 52 where the user terminal 34 receives and notes the identity of the zone 38 within which it lies on the surface of the earth 14, and thereafter, in observance of the data received from the first activity 44, determines if it is within any of the zones 38 X which are subject to congestion control. Control then passes to a third test 54 which checks to see if the user terminal 34 is actually within any of zones 38 X of congestion control.

If the third test 54 detects that the user terminal 34 is within a zone 38 X of congestion control, control passes to a fourth test 56 where the user terminal ascertains if the service level indicator currently made available by the earth station 36 is higher or lower than that allocated to the user terminal 34. If the third test 56 detects that the service level indicator, appropriate to the individual user terminal 34, is less than the service level indicator put out by the earth station 36, control is passed to a fourth operation 58 where the call attempt (request for service) is abandoned and control passed back to the first operation 44 where the user terminal 34 simply listens to the broadcasts (BCCH) from the appropriate communications satellite 10A 10B.

If the third test 54 detects that the user terminal 34 is not within any zone 38 X of congestion control, and, also, if the fourth test 56 detects that, even though in a zone 38 X of congestion control, the allocated service level indicator to the user terminal is greater than that indicated by the earth station 36 in the first operation 44, control is passed to a fifth operation 60 where the progress of the call, or any other requirement that initiated the service request, is carried on.

A fifth test 62 checks to see if the activity of the fifth operation 60 is over. If it is not, the fifth operation 60 continues. If the fifth operation 60 is complete, control is passed back to the first operation 44.

Figure 9 shows the operation of the earth station 36 (or whatever part of the system assumes control) when the requirements of the present invention are met.

Entry is into a sixth operation 64 where the earth station 36 listens for service requests. A sixth test 66 checks if a service request has been received, maintains the sixth operation 64 if no service request has been received, and passes control to a seventh test 68 if a service request has been received.

The seventh test 68 looks to see if the service request is readable. Clashing service requests, simultaneously from two or more user terminals 34, are unreadable. Single service requests, from just one user terminal 34, are readable. If the service request was readable, control is passed to a seventh operation 70 where the successful service request is added to a table of successful service requests. Control is then passed to an eighth operation 72 where the earth station 36 calculates the position of user terminal 34 on the surface of the earth 14 and adds the result to the zone 38 map. Control then passes to a ninth operation 74 where the earth station 36 passes its information to other earth stations 36 which can impinge on the common area, and, in turn, receives their updated information.

This complete, control then passes to a ninth operation 76 where the earth station calculates the congestion control detection parameters as previously described.

Returning to the seventh test 68, if the earth station 36 receives an unreadable service request, the seventh test 68 passes control to an eleventh operation 78 where the failed service request is logged. Control then passes to the tenth operation 76.

The tenth operation 76 passes control to an eighth test 80 which checks if congestion has occurred according to the earlier described criteria.

If there is no present congestion, perhaps the service level indicator is too high. The eighth test 80 passes control to a twelfth operation 82 which increases the service level indicator so that more user terminals in the congested zones 38 X can participate. Control then passes to a thirteenth operation 84 which causes the earth station 36 to inform the user terminals 34 of the new service level indicator via the broadcast channel (BCCH). Control then passes to the sixth operation 64.

If the eighth test 80 detects a congestion condition. control passes to a fourteenth operation 88 where the service level indicator is reduced. At the same time, a fifteenth operation 86 calculate anew which zones 38X are subject to congestion control. Control then passes to the thirteen operation 84 where the identities of current zones 38 X, subject to congestion control and service level indicator are passed to the user terminals 34.

## Claims

1. A satellite communications system comprising a satellite, in orbit about the earth, a plurality of user terminals on the surface of the earth, and an earth station, operative to exchange signals with each of said plurality of user terminals via said satellite, said system being characterised by: each of said plurality of user terminals and said earth station being co-operative to measure the position of said each of said plurality of user terminals on the surface of the earth; by said earth station being operative to indicate to each of at least some of said plurality of user terminals in which one of a plurality of zones they respectively are located; by, said earth station being operative to detect a congestion condition and to detect from which zone or zones the congestion originates; said earth station being operative to indicate to said at least some of said plurality of user terminals the identity of that zone or those zones from which congestion originates; and by each of said at least some of said plurality of user terminals observing congestion control measures if said respective indicated zone of each of said at least some of said plurality of user terminals lies within a zone from which congestion originates.

2. A system, according to claim 1, wherein said congestion control measures include; said earth station allocating and communicating a respective graded service level indicator to said each of at least some of said plurality of user terminals, said earth station allocating a minimum service level to allow access to said system when each of said at least some of said plurality user terminals is within said distance of said point, and each of said at least some of said plurality of user terminals attempting to access said system only if said respective allocated service level indicator exceeds said minimum service level.

3. A system, according to claim 1 or claim 2, wherein said earth station is operative to maintain a table of the position and time of each of said plurality of user terminals making a request for service, and is operative to detect a condition of radio congestion in a zone if more than a predetermined number of requests for service arise in a predetermined time within that zone.

4. A system, according to claims 1, 2 or 3, wherein said earth station is operative to detect a congestion condition if more than a predetermined proportion of requests for service from said plurality of user terminals are unreadable.

5. A system, according to claim 4 when dependent upon claim 2, wherein said earth station is operative, progressively, to adjust said minimum service level, to maintain said proportion of unreadable requests below said predetermined proportion.

6. A system, according to any of the preceding claims, wherein said satellite is operative to provide a array comprising plurality of adjacent spot beams to give radio coverage to the surface of the earth, said earth station being operative independently to maintain said detection of said congestion condition and independently to provide said indication of said point and said distance for each of said plurality of spot beams.

7. A system, according to claim 6, wherein said array is in movement with respect to the surface of the earth, and wherein, as one spot beam replaces another spot beam to cover said area of congestion, said earth station is operative to transfer all data relating to congestion control in said one spot beam for use in operation of said another spot beam.

8. A method for use in a satellite communications system comprising a satellite, in orbit about the earth, a plurality of user terminals on the surface of the earth, and an earth station, operative to exchange signals with each of said plurality of user terminals via said satellite, said method being characterised by including the steps of: each of said plurality of user terminals and said earth station co-operating to measure the position of said each of said plurality of user terminals on the surface of the earth; said earth station indicating to each of at least some of said plurality of user terminals in which one of a plurality of zones they respectively are located; said earth station detecting a congestion condition and detecting from which zone or zones the congestion originates; said earth station indicating to said at least some of said plurality of user terminals the identities of that zone or those zones from which congestion originates; and each of said at least some of said plurality of user terminals observing congestion control measures if said respective indicated zone of each of said at least some of said plurality of user terminals lies within a zone from which congestion originates.

9. A method, according to claim 8, wherein said congestion control measures include the steps of; said earth station allocating and communicating a respective graded service level indicator to said each of at least some of said plurality of user terminals, said earth station allocating a minimum service level to allow access to said system when each of said at least some of said plurality user terminals is within said distance of said point, and each of said at least some of said plurality of user terminals attempting to access said system only if said respective allocated service level indicator exceeds said minimum service level.

10. A method, according to claim 8 or claim 9, including the steps of said earth station is maintaining a table of the position and time of each of said plurality of user terminals making a request for service, and detecting a condition of radio congestion if more than a predetermined number of requests for service arise in a predetermined time within a predetermined area.

11. A method, according to claims 8, 9 or 10, including the step of said earth station detecting a congestion condition if more than a predetermined proportion of requests for service from said plurality of user terminals are unreadable.

12. A method, according to claim 11 when dependent upon claim 9, including the step of said earth station progressively, to adjusting said minimum service level to maintain said proportion of unreadable requests below said predetermined proportion.

13. A method, according to any of claims 8 to 12, wherein said satellite is operative to provide a array comprising plurality of adjacent spot beams to give radio coverage to the surface of the earth, said method including the step of said earth station be independently maintaining said detection of said congestion condition and independently providing said indication of said point and said distance for each of said plurality of spot beams.

14. A method, according to claim 13, wherein said array is in movement with respect to the surface of the earth, said method including the step of , as one spot beam replaces another spot beam to cover said area of congestion, said earth station transferring all data relating to congestion control in said one spot beam for use in operation of said another spot beam.

15. A user terminal, being one of a plurality of user terminals, for user in satellite communications system comprising a satellite, in orbit about the earth, said plurality of user terminals on the surface of the earth, and an earth station, operative to exchange signals with each of said plurality of user terminals via said satellite, said user terminal being characterised by: each of said plurality of user terminals and said earth station being co-operative to measure the position of said each of said plurality of user terminals on the surface of the earth; by each of at least some of said plurality of user terminals being operative to receive, from said earth station, indication of in which one of a plurality of zones they respectively are located; by, when said earth station detects a congestion condition and detects from which zone or zones the congestion originates, each of said at least some of said plurality of user terminals being operative to receive, from said earth station, indication of the identity of that zone or those zones from which congestion originates; and by each of said at least some of said plurality of user terminals observing congestion control measures if said respective indicated zone of each of said at least some of said plurality of user terminals lies within a zone from which congestion originates.

16. A user terminal, according to claim 15, wherein said congestion control measures include; said earth station allocating and communicating a respective graded service level indicator to said each of at least some of said plurality of user terminals, said earth station allocating a minimum service level to allow access to said system when each of said at least some of said plurality user terminals is within said distance of said point, and each of said at least some of said plurality of user terminals attempting to access said system only if said respective allocated service level indicator exceeds said minimum service level.

17. A user terminal, according to claim 15 or claim 16, for user in a system wherein said earth station is operative to maintain a table of the position and time of each of said plurality of user terminals making a request for service, and is operative detect a condition of radio congestion if more than a predetermined number of requests for service arise in a predetermined time within a predetermined area.

18. A user terminal, according to claims 15, 16 or 17, for use in a system wherein said earth station is operative to detect a congestion condition if more than a predetermined proportion of requests for service from said plurality of user terminals are unreadable.

19. A user terminal, according to claim 18 when dependent upon claim 16, for use in a system wherein said earth station is operative, progressively, to adjust said minimum service level, to maintain said proportion of unreadable requests below said predetermined proportion.

20. A user terminal, according to any of claims 15 to 19, for use in a system wherein said satellite is operative to provide a array comprising plurality of adjacent spot beams to give radio coverage to the surface of the earth, said earth station being operative independently to maintain said detection of said congestion condition and independently to provide said indication of said point and said distance for each of said plurality of spot beams.

21. A user terminal, according to claim 20, for use in a system wherein said array is in movement with respect to the surface of the earth, and wherein, as one spot beam replaces another spot beam to cover said area of congestion, said earth station is operative to transfer all data relating to congestion control in said one spot beam for use in operation of said another spot beam.

22. An earth station, for use in a satellite communications system comprising a satellite, in orbit about the earth, a plurality of user terminals on the surface of the earth, and said earth station, operative to exchange signals with each of said plurality of user terminals via said satellite, said earth station being characterised by: each of said plurality of user terminals and said earth station being co-operative to measure the position of said each of said plurality of user terminals on the surface of the earth; by said earth station being operative to indicate to each of at least some of said plurality of user terminals in which one of a plurality of zones they respectively are located; by, said earth station being operative to detect a congestion condition and to detect from which zone or zones the congestion originates; and by said earth station being operative to indicate to said at least some of said plurality of user terminals the identity of that zone or those zones from which congestion originates for each of said at least some of said plurality of user terminals observing congestion control measures if said respective indicated zone of each of said at least some of said plurality of user terminals lies within a zone from which congestion originates.

23. An earth station, according to claim 22, wherein said congestion control measures include; said earth station allocating and communicating a respective graded service level indicator to said each of at least some of said plurality of user terminals, said earth station allocating a minimum service level to allow access to said system when each of said at least some of said plurality user terminals is within said distance of said point, and each of said at least some of said plurality of user terminals attempting to access said system only if said respective allocated service level indicator exceeds said minimum service level.

24. An earth station, according to claim 22 or claim 23, operative to maintain a table of the position and time of each of said plurality of user terminals making a request for service, and to detect a condition of radio congestion if more than a predetermined number of requests for service arise in a predetermined time within a predetermined area.

25. An earth station, according to claims 22, 23 or 24, operative to detect a congestion condition if more than a predetermined proportion of requests for service from said plurality of user terminals are unreadable.

26. An earth station, according to claim 25 when dependent upon claim 23, operative, progressively, to adjust said minimum service level, to maintain said proportion of unreadable requests below said predetermined proportion.

27. An earth station, according to any of claims 22 to 26, for use where said satellite is operative to provide a array comprising plurality of adjacent spot beams to give radio coverage to the surface of the earth, said earth station being operative independently to maintain said detection of said congestion condition and independently to provide said indication of said point and said distance for each of said plurality of spot beams.

28. An earth station, according to claim 27, for use where said array is in movement with respect to the surface of the earth, said earth station, as one spot beam replaces another spot beam to cover said area of congestion, being operative to transfer all data relating to congestion control in said one spot beam for use in operation of said another spot beam.
